(19) Europäisches Patentamt

European Patent Office

Office européen des brevets

(11) **EP 0 623 774 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(51) Int Cl.6: **F16K 51/00**, F16K 17/04, F16K 37/00

(21) Anmeldenummer: **94106433.9**

(22) Anmeldetag: **25.04.1994**

(54) **Verfahren und Einrichtung zum Prüfen eines federbelasteten Sicherheitsventils**

Examination process and device for a spring safety valve

Procédé et dispositif de contrôle d'une soupape de sûreté à ressort

(84) Benannte Vertragsstaaten:
**BE DE ES FR SE**

(30) Priorität: **07.05.1993 DE 4315281**

(43) Veröffentlichungstag der Anmeldung:
**09.11.1994 Patentblatt 1994/45**

(73) Patentinhaber: **SIEMENS AKTIENGESELLSCHAFT 80333 München (DE)**

(72) Erfinder:
- **Kühn, Edmund Dipl.-Ing.**
  **D-91058 Erlangen (DE)**
- **Sieber, Tilo Dipl.-Ing.**
  **D-01728 Bannewitz (DE)**
- **Butkereit, Werner Dipl.-Ing.**
  **D-91085 Weisendorf (DE)**

(56) Entgegenhaltungen:
| EP-A- 0 017 365 | DE-A- 3 737 095 |
| FR-A- 2 567 643 | US-A- 4 274 438 |
| US-A- 4 572 237 | US-A- 4 761 999 |
| US-A- 4 949 288 | |

- VGB KRAFTWERKSTECHNIK, Bd.73, Nr.1, Januar 1993, ESSEN DE Seiten 54 - 59, XP000332406 STOLTE 'Einbau und Prüfung von federbelasteten Sicherheitsventilen'

**Beschreibung**

Die Erfindung betrifft ein Verfahren zum Prüfen eines federbelasteten Sicherheitsventils, das eine Schließvorrichtung enthält und mit einem Medium beaufschlagt ist, wobei zur Ermittlung des Schließdruckes des Sicherheitsventils der Druck des Mediums auf die Schließvorrichtung kleiner als der zu erwartende Schließdruck gewählt wird und wobei die Schließvorrichtung durch eine von einer Hubhilfseinrichtung ausgehenden Kraft angehoben wird, indem ein Raum oberhalb einer Hubglocke in der Hubhilfseinrichtung mit einem Hilfsmedium beaufschlagt wird.

Die Erfindung betrifft auch eine Einrichtung zum Prüfen eines federbelasteten Sicherheitsventils, das eine Schließvorrichtung mit einem Ventilteller enthält und von einem Medium beaufschlagt ist, wobei auf den Ventilteller des Sicherheitsventils ein Druck des Mediums einwirkt, der kleiner als der zu erwartende Schließdruck ist, wobei mit dem Sicherheitsventil eine Hubhilfseinrichtung, die in Öffnungsrichtung des Sicherheitsventils wirkt und dieses öffnen kann, verbindbar ist, und wobei die Hubhilfseinrichtung eine mit der Schließvorrichtung des Sicherheitsventils verbindbare Hubglocke enthält, die in einem Gehäuse verschiebbar ist, wobei ein Raum auf der dem Sicherheitsventil zugewandten Seite der Hubglocke in der Hubhilfseinrichtung angeordnet ist, der mit einer Zuleitung und mit einer Ableitung für ein Hilfsmedium verbunden ist.

Die Schließvorrichtung des federbelasteten Sicherheitsventils weist eine Spindel, an die ein Ventilteller angeformt ist. auf. Der Ventilteller kann auf einem Ventilsitz aufliegen, der Bestandteil eines Ventilgehäuses ist. In diesem Zustand ist das Sicherheitsventil geschlossen, das heißt, daß die Verbindung zwischen einer Mediumzuleitung und einer Mediumableitung verschlossen ist.

Derartige federbelastete Sicherheitsventile werden z.B. zum Steuern eines Hauptventils aber auch selbstabsichernd eingesetzt. Beispielsweise kann ein solches Sicherheitsventil eingangsseitig mit dem Primärkreislauf eines Kernkraftwerkes verbunden sein. Falls der eingangsseitige Druck einen Ansprechdruck des Sicherheitsventils überschreitet, wird die Schließvorrichtung des Sicherheitsventils gegen eine Federkraft geöffnet. Das Medium kann dann durch das Sicherheitsventil hindurch zu einem Hauptventil gelangen und dieses öffnen. Erst wenn der Mediumdruck im Sicherheitsventil unter einen Schließdruck des Sicherheitsventils abgefallen ist, überwiegt wieder die Federkraft und das Sicherheitsventil wird geschlossen.

Der Ansprechdruck eines federbelasteten Sicherheitsventils liegt stets oberhalb des Schließdruckes. Das Ventil öffnet bei Überschreiten des höheren Ansprechdruckes und schließt erst dann, wenn danach der tiefer liegende Schließdruck wieder unterschritten ist.

Im Rahmen wiederkehrender Sicherheitsüberprüfungen, insbesondere in einem Kernkraftwerk, muß auch die Funktionsweise der federbelasteten Sicherheitsventile. z.B. der Steuerventile, überprüft werden. Es ist bekannt, eine solche Prüfung bei einem Mediumdruck durchzuführen, der oberhalb des Schließdruckes des Sicherheitsventils liegt. Dann ist es möglich, den momentanen Schließdruck des Sicherheitsventils zu bestimmen, was bei einer umfassenden Sicherheitsüberprüfung notwendig ist. Bei einer solchen bekannten Prüfung wird der Mediumdruck nach dem Öffnen des Sicherheitsventils durch Abkühlen des Mediums solange verkleinert, bis das Sicherheitsventil schließt. Das Abkühlen erfolgt beispielsweise durch Besprühen mit kaltem Wasser. Das führt aber zu einer hohen thermischen Belastung der Bauteile des Ventils und weiterer Komponenten, die sich im Kreislauf des Mediums befinden.

Wegen dieser hohen thermischen Belastung wurde bisher eine Prüfung der Sicherheitsventile häufig bei einem Mediumdruck, der unter dem Schließdruck liegt, durchgeführt. Damit das Sicherheitsventil geöffnet werden kann, ist dann eine Hubhilfseinrichtung erforderlich. Eine solche Hubhilfseinrichtung ist auch erforderlich, falls bei einer Prüfung mit einem Mediumdruck, der zwischen dem Schließdruck und dem Ansprechdruck liegt, gearbeitet wird.

Eine übliche Hubhilfseinrichtung ist ein auf das Sicherheitsventil aufsetzbares Gerät, wobei einerseits das Gehäuse der Hubhilfseinrichtung mit dem Ventilgehäuse in Verbindung steht und andererseits eine Hubglocke in der Hubhilfseinrichtung mit der Spindel des Sicherheitsventils in Verbindung steht. Eine solche Hubglocke kann auch eben, als Hubteller, ausgebildet sein. Zum Öffnen des Sicherheitsventils wird die Hubhilfseinrichtung über ein separates Versorgungssystem mit einem Hilfsmedium, das Stickstoff sein kann, beaufschlagt. Das Hilfsmedium hebt die Hubglocke an und unterstützt damit die Öffnung des federbelasteten Sicherheitsventils. Wenn die Hubhilfseinrichtung vom Hilfsmedium entlastet wird, überwiegt sofort die in Schließrichtung wirkende Federkraft des Sicherheitsventils, so daß dieses schnell zuschlägt. Bei dieser schnellen Bewegung ist aber ein Erfassen des Schließdruckes nicht möglich.

Ein Verfahren und eine Einrichtung zum Prüfen des Öffnungs- und des Schließdruckes eines federbelasteten Sicherheitsventils mit Hilfe einer Drucklufthubvorrichtung ist aus dem Aufsatz von J. Stolte "Einbau und Prüfung von federbelasteten Sicherheitsventilen" in VGB-Kraftwerkstechnik 73 (1993), Heft 1, Seiten 54 bis 59, bekannt. Dabei braucht der Betriebsdruck des Ventils zur Prüfung nicht erhöht zu werden. Zum Öffnen des Ventils wird vielmehr eine zusätzliche Kraft mechanisch, pneumatisch oder hydraulisch erzeugt. Dazu dient z.B. ein mit Druckluft beaufschlagter Kolben, der mit der Spindel des Sicherheitsventils in Verbindung steht. Zum Schließen des Ventils wird dieser Kolben vom Druck entlastet. Es kommt dadurch zu einem sehr schnellen Schließen des Ventils. Der Schließdruck kann dabei nur schwer ermittelt werden.

Eine Prüfung eines Sicherheitsventils unterhalb des Schließdruckes wird im übrigen von der Fachwelt als nicht erfolgversprechend angesehen, da in einem, z.B. als Steuerventil eingesetzten, Sicherheitsventil aufgrund seines Aufbaus komplexe Strömungsverhältnisse vorherrschen. Bisher wurde daher in der Regel auf die Ermittlung des Schließdrucks eines Steuerventils verzichtet.

Der Erfindung lag die Aufgabe zugrunde, ein Verfahren und eine Einrichtung zum Prüfen eines federbelasteten Sicherheitsventils anzugeben, die eine Ermittlung des Schließdruckes des Sicherheitsventils ermöglichen, ohne daß es zu einer hohen thermischen Belastung von Bauteilen kommen kann. Es soll kein Abkühlen des Mediums zum Beispiel durch Besprühen von Bauteilen und Komponenten mit Wasser notwendig sein. Es soll aber auch ein zu schnelles Schließen des Sicherheitsventils vermieden werden, damit der Schließdruck mit großer Genauigkeit bestimmt werden kann.

Die Aufgabe, ein Verfahren zum Prüfen eines Sicherheitsventils anzugeben, wird gemäß der Erfindung dadurch gelöst, daß zum Schließen des Sicherheitsventils das Hilfsmedium aus dem mit dem Hilfsmedium beaufschlagten Raum der Hubhilfseinrichtung abgeleitet und gleichzeitig ein Hilfsmediumvorrat durch den Raum hindurchgeleitet und abgeleitet wird, daß die Drücke des Mediums und des Hilfsmediums bei sich schließendem Sicherheitsventil gemessen werden und daß aus diesen Drücken, aus dem wirksamen Flächenverhältnis der Hubglocke und des Ventiltellers der Schließvorrichtung und aus einer Konstanten der Schließdruck nach der Gleichung

$$P_S = P_P + \frac{P_H \cdot V_A}{m + 1}$$

bestimmt wird, wobei $P_S$ der Schließdruck des Sicherheitsventils, $P_P$ der gemessene Druck des Mediums (M), der beim Schließvorgang auf die Schließvorrichtung wirkt, $P_H$ der gemessene Druck des Hilfsmediums (H), der beim Schließvorgang auf die Hubglocke wirkt, $V_A$ das Verhältnis der wirksamen Flächen von Hubglocke und Schließvorrichtung und m eine Konstante sind.

Mit dem Verfahren nach der Erfindung wird vorteilhafterweise gewährleistet, daß das Sicherheitsventil, nachdem es geöffnet worden ist, auch wieder langsam schließt. Das ist dadurch gegeben, daß der Hilfsmediumvorrat durch den mit dem Hilfsmedium beaufschlagten Raum, der sich unterhalb der Hubglocke befindet, hindurchgeleitet wird. Die Hubglocke wird auf diese Weise langsam entlastet und folglich schließen die Hubglocke und auch die mit ihr verbundene Schließvorrichtung des Sicherheitsventils langsam, bis sie dann ab einem Resthub selbsttätig schließen. Durch diesen langsamen Ablauf ist es möglich, den Schließdruck, nämlich den Druck bei dem das Sicherheitsventil schließt, mit geeigneten Meßaufnehmern genau zu bestimmen. Es wird mit dem Verfahren nach der Erfindung vorteilhafterweise vermieden, daß bei einem schnellen Zuschlagen des Sicherheitsventils dieses beschädigt werden könnte. Weiterhin muß zum Erreichen des Schließdruckes keine Abkühlung irgendwelcher Komponenten mit dem Ziel, den Druck zu vermindern, vorgenommen werden. Man kommt also ohne eine thermische Belastung aus.

Zum Bestimmen der genannten Konstanten m wird beispielsweise an mehreren bekannten federbelasteten Sicherheitsventilen der Schließdruck $P_S$ nach einem anderen, bekannten Verfahren gemessen. Es werden außerdem die Drücke des Mediums $P_P$ und des Hilfsmediums $P_H$ beim Schließvorgang gemessen. Aus diesen Werten läßt sich ein Korrekturglied K nach der Gleichung $P_S = P_P + P_H \cdot V_A + K$ [1] ermitteln. Ausgehend von der Erkenntnis, daß das Korrekturglied K proportional zum Schließdruck $P_S$ ist, erhält man die Konstante m experimentell als Steigung einer aus mehreren Wertepaaren
$(-K, P_S)$ gewonnenen Funktion $-K = f (P_S)$.

Die Aufgabe, eine Einrichtung zum Prüfen eines federbelasteten Sicherheitsventils anzugeben, wird gemäß der Erfindung dadurch gelöst, daß in der Zuleitung ein Vorratsbehälter für Hilfsmedium angeordnet ist, der bei geöffnetem Sicherheitsventil gefüllt ist, daß in der Ableitung ein Ventil angeordnet ist, so daß beim Öffnen dieses Ventils der Inhalt des Vorratsbehälters durch den Raum der Hubhilfseinrichtung abströmt, und daß Druckaufnehmer im Medium und im Hilfsmedium angeordnet sind, die mit einer Auswerteeinheit verbunden sind, der eine Konstante und das Verhältnis der wirksamen Flächen von Hubglocke und Ventilteller zuführbar sind.

Die wirksame Fläche ist die senkrecht zur jeweiligen Bewegungsrichtung angeordnete größte Querschnittsfläche der Hubglocke bzw. des Ventiltellers. Diese sind vom Medium bzw. vom Hilfsmedium beaufschlagt.

Mit der Einrichtung nach der Erfindung wird der Vorteil erzielt, daß der Schließdruck bestimmt werden kann, ohne daß Anlagenteile zum Abkühlen, z.B. durch Besprühen mit Wasser, thermisch belastet werden müßten und ohne daß die Meßgenauigkeit durch zu schnelles Schließen nur gering wäre.

Zum Bestimmen der Konstanten m sind beispielsweise an Sicherheitsventilen, deren Schließdrücke bekannt sind, Druckaufnehmer im Medium und im Hilfsmedium angeordnet. Diese beiden Druckaufnehmer sind mit der Auswerteeinheit verbunden. Dort wird die Konstante bestimmt und als Wert für die Schließdruckbestimmung zur Verfügung gestellt. Es können auch zwei Auswerteeinheiten zum Bestimmen der Konstanten und zum Bestimmen des Schließdruckes mit Hilfe der Konstanten vorhanden sein .

Mit dem Verfahren und mit der Einrichtung nach der Erfindung ist vorteilhafterweise ein schnelles und zuverlässiges, Bauteile schonendes Prüfen eines Sicherheitsventils möglich, wobei auch der Schließdruck des Sicherheitsventils bestimmt und überwacht wird.

Das Verfahren und die Einrichtung nach der Erfindung werden anhand der Zeichnung näher erläutert:

Figur 1 zeigt den Aufbau der Einrichtung zum Prüfen eines Sicherheitsventils nach der Erfindung.

Figur 2 zeigt die Abhängigkeit des Korrekturgliedes -K vom Schließdruck $P_S$.

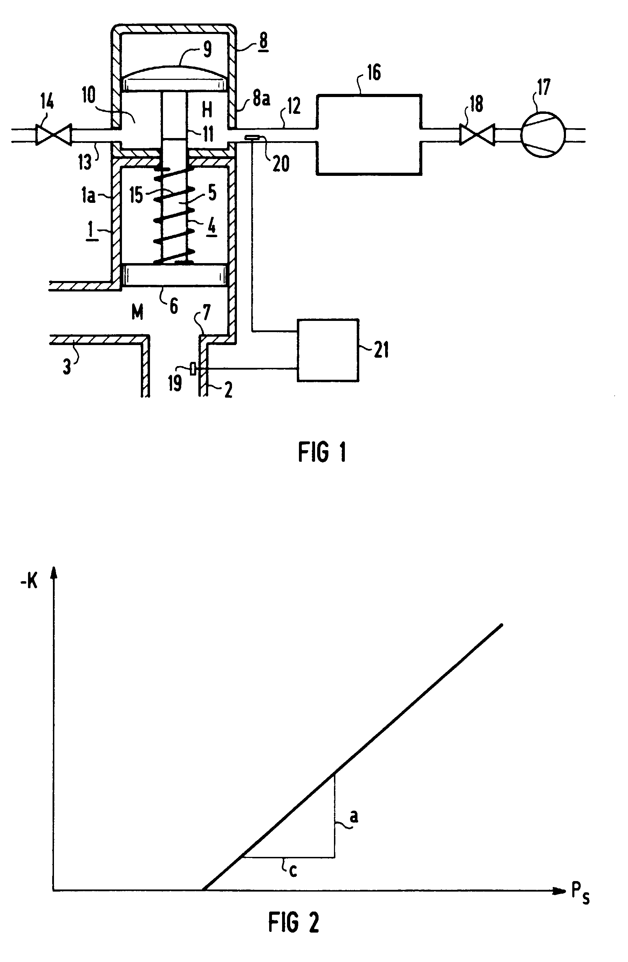

Figur 1 zeigt ein Sicherheitsventil 1 mit einem Gehäuse 1a und einer Zuleitung 2 und einer Ableitung 3 für ein Medium M. Im Sicherheitsventil 1 ist eine Schließvorrichtung 4 angeordnet. Diese Schließvorrichtung 4 besteht aus einer Spindel 5, der eine Schließfeder 15 zugeordnet ist, und einem Ventilteller 6, der mit einem Ventilsitz 7 zusammenwirken kann. Zur Prüfung des Sicherheitsventils 1 wird die Schließvorrichtung 4 über die Zuleitung 2 mit dem Medium M beaufschlagt, wobei der Druck $P_P$ des Mediums M während der Prüfung (Mediumdruck) kleiner als der erwartete Schließdruck $P_S$ des Sicherheitsventils 1 ist.

Bei einem Sicherheitsventil 1 unterscheidet man den Ansprechdruck des Mediums M, bei dem die Schließvorrichtung 4 angehoben wird, und den Schließdruck, $P_S$, bei dem die Schließvorrichtung 4 wieder schließt. Dieser Schließdruck $P_S$ ist stets niedriger als der Ansprechdruck, bei dem die Schließvorrichtung 4 öffnet. Um Belastungen von Bauteilen zu vermeiden, wird bei dem Verfahren nach der Erfindung der Schließdruck $P_S$ bei einem Mediumdruck $P_P$ ermittelt, der unterhalb des zu erwartenden Schließdruckes $P_S$ liegt. Damit das Sicherheitsventil 1 dann überhaupt geöffnet werden kann, steht es mit einer Hubhilfseinrichtung 8 in Verbindung. Diese enthält eine Hubglocke 9 in einem Gehäuse 8a, die mittels einer Glockenspindel 11 durch Durchführungen in den Gehäusen 1a und 8a hindurch mit der Spindel 5 der Schließvorrichtung 4 in Verbindung steht. Ein Raum 10 unterhalb der Hubglocke 9 in der Hubhilfseinrichtung 8 ist mit einer Zuleitung 12 und einer Ableitung 13 für ein Hilfsmedium H verbunden. Dieses Hilfsmedium H kann Stickstoffgas sein. Um die Schließvorrichtung 4 des Sicherheitsventils 1 anzuheben, wird das Hilfsmedium H in den Raum 10 geleitet. Das Sicherheitsventil 1 öffnet dann. Um den Schließdruck $P_S$ des Sicherheitsventils 1, das ist der Druck des Mediums M zu dem Zeitpunkt, wenn das Sicherheitsventil 1 schließt, zu ermitteln, muß ein Schließvorgang eingeleitet werden. Eine Reduzierung des Mediumdruckes $P_P$ unterhalb des Ventiltellers 6 läge nahe. Das ist aber nur durch ein Abkühlen des Mediums M möglich, was eine thermische Belastung von Bauteilen bedeuten würde. Ein Schließvorgang kann auch eingeleitet werden, indem die Ableitung 13 der Hubhilfseinrichtung 8 geöffnet wird. Dazu befindet sich in der Ableitung 13 ein Ventil 14. Bei einer solchen schnellen Entlastung der Hubglocke 9 würde die Kraft der Schließfeder 15 im Sicherheitsventil 1 sehr schnell überwiegen, so daß der Ventilteller 6 sehr schnell auf den Ventilsitz 7 aufschlagen würde. Bei einem solchen schnellen Ablauf sind das Messen des Druckes $P_P$ im Medium M zum Zeitpunkt des Schließens des Sicherheitsventils 1 und damit das Bestimmen des Schließdruckes $P_S$ des Sicherheitsventils 1 unmöglich.

Nach der Erfindung befindet sich in der Zuleitung 12 für das Hilfsmedium H, die in die Hubhilfseinrichtung 8 mündet, ein Vorratsbehälter 16 für das Hilfsmedium H.

Zum Füllen dieses Vorratsbehälters 16 ist ein Kompressor 17 vorhanden. Es kann auch eine 200bar-Gasflasche, z.B. eine Stickstoffflasche, mit Reduzierventil vorhanden sein. Für eine Überprüfung des Sicherheitsventils 1 müssen durch den Kompressor 17 der Vorratsbehälter 16 und der Raum 10 unterhalb der Hubglocke 9 mit dem Hilfsmedium H gefüllt sein.

Zum Entlasten des Raumes 10 wird zunächst der Kompressor 17 durch ein Ventil 18 gegenüber dem Vorratsbehälter 16 abgesperrt. Dann wird das Ventil 14 in der Ableitung 13 geöffnet. Bedingt durch den relativ großen Vorrat an Hilfsmedium H, der sich im Vorratsbehälter 16 befindet und der durch den Raum 10 hindurchgeleitet wird, kommt es zu einem sehr langsamen Absinken der Hubglocke 9 in der Hubhilfseinrichtung 8. Entsprechend langsam senkt sich auch die Schließvorrichtung 4 des Sicherheitsventils 1 ab. Es bleibt also Zeit eine Messung des Schließdruckes $P_S$ vorzunehmen. Dazu müssen der Druck $P_P$ des Mediums M unterhalb der Schließvorrichtung 4 im Sicherheitsventil 1 und der Druck $P_H$ des Hilfsmediums H unterhalb der Hubglocke 9 in der Hubhilfseinrichtung 8 zum Zeitpunkt dieses Schließvorganges gemessen werden. Dazu sind Druckaufnehmer 19 und 20 in den genannten Teilräumen des Sicherheitsventils 1 und der Hubhilfseinrichtung 8 angeordnet. Die Druckaufnehmer 19 und 20 sind mit einer Auswerteeinheit 21 verbunden. Der Auswerteeinheit 21 wird auch das bekannte Flächenverhältnis der Hubglocke 9 und des Ventiltellers 6 zugeleitet. Dabei sind die für den anstehenden Druck wirksamen Flächen gemeint. Außerdem wird der Auswerteeinheit 21 eine experimentell ermittelte Konstante m zugeleitet. Aus den vorhandenen Größen wird in der Auswerteeinheit 21 der Schließdruck $P_S$ des Sicherheitsventils 1 bestimmt. Der Schließdruck $P_S$ kann mit einem Sollschließdruck verglichen werden, so daß ein Hinweis auf den Zustand des Sicherheitsventils 1 gegeben werden kann.

Der Schließdruck $P_S$ setzt sich zusammen aus dem Druck $P_P$ des Mediums M. dem Druck $P_H$ des Hilfsmediums H und aus einer Einflußgröße, die auf die Strömung des Mediums M durch das Sicherheitsventil 1 zurückzuführen ist.

Man geht aus von der Bernoulli-Gleichung, die z.B. aus der Brockhaus-Enzyklopädie. Band 3, 1987, bekannt ist. Sie lautet dort:

$$p + \rho \cdot h + \frac{1}{2} \rho \cdot v^2 = \text{const.}$$

Dabei ist p der statische Druck eines Mediums, $\rho \cdot g \cdot h$ ist der Druck, der auf die potentielle Energie einer Volumeneinheit des Mediums gegenüber einem Bezugsniveau zurückzuführen ist. $\frac{1}{2} \cdot \rho\text{-}v^2$ ist der Druck, der auf die Geschwindigkeit der Strömung des Mediums zurückzuführen ist. Dieser Druck wird mit Staudruck oder mit "Geschwindigkeitsanteil" bezeichnet.

Zum Bestimmen des Schließdruckes $P_S$ des Sicherheitsventils 1 ist davon auszugehen, daß, wenn das Sicherheitsventil 1 schließt, die statischen Drücke des Mediums M und des Hilfsmediums H, sowie der Geschwindigkeitsanteil des Mediums M und Einflüsse der potentiellen Energie wirken.

Der Schließdruck $P_S$ ist also aus diesen Drücken zusammengesetzt. Es gilt:

$$P_S = P_P + P_H \cdot V_A + \frac{1}{2} \rho \cdot v^2 + \rho \cdot g \cdot h$$

Dabei ist $P_S$ der Schließdruck, $P_P$ ist der Druck des Mediums M beim Schließvorgang, $P_H$ ist der Druck des Hilfsmediums H beim Schließvorgang, $V_A$ ist das Verhältnis der wirksamen Fläche der Hubglocke 9 und der wirksamen Fläche der Schließvorrichtung 4, insbesondere des Ventiltellers 6; $\rho$ ist die Dichte des Mediums M und v ist die Geschwindigkeit des Mediums M. $\rho \cdot g \cdot h$ kann vernachlässigt werden, wenn das Medium M ein Gas ist.

$\frac{1}{2} \rho\, v^2 + \rho \cdot g \cdot h$ wird zusammen mit einem zusätzlichen Summand, der dem unbekannten Druckunterschied zwischen dem zu bestimmenden Schließdruck $P_S$ und dem gemessenen Druck $P_P$ des Mediums M entspricht, als Korrekturglied K bezeichnet. Man erhält:

$$P_S = P_p + P_H \cdot V_A + K \qquad [1]$$

Dieses Korrekturglied K wird experimentell ermittelt. Es wurde erkannt, daß -K proportional zum Schließdruck $P_S$ ist. Man kann daher die folgende Gleichung aufstellen:

$$-K = m\, P_S + b \qquad [2]$$

m und b sind dabei Konstanten.
Sollte der Mediumdruck $P_P$ unterhalb des Ventiltellers 6 genau dem Schließdruck $P_S$ entsprechen, dann muß der Druck im Raum 10 der Hubhilfseinrichtung 8 Null sein. Folglich sollte dann auch K = 0 gelten.

Nimmt man an, daß K = 0 gilt, wenn $P_S = P_P$ gilt, dann ergibt sich aus [2] b = -m $P_P$. Man erhält dann durch Einsetzen in [2]: -K = m $\cdot P_S$ -m. $P_P$ Durch Einsetzen in die obengenannte Gleichung [1] ergibt sich:

$$P_S = P_P + P_H \cdot V_A \text{ -m} \cdot P_S + m \cdot P_P$$

Daraus folgt durch Umformung:

$$P_S = P_P + \frac{P_H \cdot V_A}{m + 1} \qquad [3]$$

Hiermit läßt sich der Schließdruck $P_S$ aus den gemessenen Drücken $P_P$ und $P_H$ sowie aus dem bekannten Flächenverhältnis $V_A$ ermitteln, sofern die Konstante m bekannt ist. Diese kann an bekannten, gleichartigen Sicherheitsventilen ermittelt werden, bei denen die Schließdrücke $P_S$ auf andere Weise bereits ermittelt worden sind. Das Ermitteln der Konstanten m erfolgt dabei experimentell. indem bei bekannten Drücken $P_S$, $P_P$ und $P_H$ und bei bekanntem Verhältnis $V_A$ aus der Gleichung [1] für jeden Schließdruck $P_S$ der Wert von -K bestimmt wird. Trägt man nach Figur 2 die Wertepaare (-K, $P_S$) in ein Koordinatensystem ein, dann erhält man als Funktion -K = f ($P_S$) eine Gerade, deren Steigung m entspricht. Die Steigung m kann aus Figur 2 abgelesen werden. Dabei ist m = $\frac{a}{c}$

Mit dem Verfahren nach der Erfindung kann der Schließdruck $P_S$ eines Sicherheitsventils allein nach einer einfachen Bestimmung von zwei Drücken $P_P$ und $P_H$ bestimmt werden. nachdem man zuvor die Konstante m experimentell ermittelt hat.

**Patentansprüche**

1. Verfahren zum Prüfen eines federbelasteten Sicherheitsventils (1), das eine Schließvorrichtung (4) enthält und von einem Medium (M) beaufschlagt ist, wobei zur Ermittlung des Schließdruckes ($P_S$) des Sicherheitsventils (1) der Druck des Mediums (M) auf die Schließvorrichtung (4) kleiner als der zu erwartende Schließdruck ($P_S$) gewählt wird, und wobei die Schließvorrichtung (4) durch eine von einer Hubhilfseinrichtung (8) ausgehenden Kraft angehoben wird, indem ein Raum (10) unterhalb einer Hubglocke (9) in der Hubhilfseinrichtung (8) mit einem Hilfsmedium (H) beaufschlagt wird, **dadurch gekennzeichnet**, daß zum Schließen des Sicherheitsventils (1) das Hilfsmedium (H) aus dem mit dem Hilfsmedium (H) beaufschlagten Raum (10) der Hubhilfseinrichtung (8) abgeleitet und gleichzeitig ein Hilfsmediumvorrat durch den Raum (10) hindurchgeleitet und abgeleitet wird, daß die Drücke ($P_P$, $P_H$) des Mediums (M) und des Hilfsmediums (H) bei sich schließendem Sicherheitsventil (1) gemessen werden und daß aus diesen Drücken, aus dem wirksamen Flächenverhältnis ($V_A$) der Hubglocke (9) und des Ventiltellers (6) der Schließvorrichtung (4) und aus einer Konstanten (m) der Schließdruck nach der Gleichung

$$P_S = P_P + \frac{P_H \cdot V_A}{m + 1} \qquad [3]$$

bestimmt wird, wobei $P_S$ der Schließdruck des Sicherheitsventils (1), $P_P$ der gemessene Druck des Mediums (M), der beim Schließvorgang auf die Schließvorrichtung (4) wirkt, $P_H$ der gemessene Druck des Hilfsmediums (H), der beim Schließvorgang auf die Hubglocke (9) wirkt, $V_A$ das Verhältnis der wirksamen Flächen von Hubglocke (9) und Schließvorrichtung (4) und m eine Konstante sind.

2. Verfahren nach Anspruch 1, **dadurch gekennzeichnet,** daß zum Bestimmen der Konstanten (m) an bekannten Sicherheitsventilen der Schließdruck ($P_S$) nach einem bekannten Verfahren gemessen wird, daß der Druck ($P_P$) des Mediums (M) und der Druck ($P_H$) des Hilfsmediums (H) beim Schließvorgang gemessen werden, daß ein Korrekturglied (K) nach der Gleichung $P_S = P_P + P_H \cdot V_A + K$ [1] bestimmt wird und daß die Konstante (m) experimentell als Steigung einer aus mehreren Wertepaaren (- K. $P_S$) gewonnenen Funktion $-K = f(P_S)$ bestimmt wird.

3. Einrichtung zum Prüfen eines federbelasteten Sicherheitsventils (1), das eine Schließvorrichtung (4) mit einem Ventilteller (6) enthält und von einem Medium (M) beaufschlagt ist, wobei auf den Ventilteller (6) des Sicherheitsventils (1) ein Druck des Mediums (M) einwirkt, der kleiner als der zu erwartende Schließdruck ($P_S$) ist, wobei mit dem Sicherheitsventil (1) eine Hubhilfseinrichtung (8), die in Öffnungsrichtung des Sicherheitsventils (1) wirkt und dieses öffnen kann, verbindbar ist, und wobei die Hubhilfseinrichtung (8) eine mit der Schließvorrichtung (4) des Sicherheitsventils (1) verbindbare Hubglocke (9) enthält, die in einem Gehäuse (8a) verschiebbar ist, wobei ein Raum (10) auf der dem Sicherheitsventil (1) zugewandten Seite der Hubglocke (9) in der Hubhilfseinrichtung (8) angeordnet ist, der mit einer Zuleitung (12) und mit einer Ableitung (13) für ein Hilfsmedium (H) verbunden ist, **dadurch gekennzeichnet**, daß in der Zuleitung (12) ein Vorratsbehälter (16) für Hilfsmedium (H) angeordnet ist, der bei geöffnetem Sicherheitsventil (1) gefüllt ist, daß in der Ableitung (13) ein Ventil (14) angeordnet ist, so daß beim Öffnen dieses Ventils (14) der Inhalt des Vorratsbehälters (16) durch den Raum (10) der Hubhilfseinrichtung (8) hindurch abströmt, und daß Druckaufnehmer (19, 20) im Medium (M) und im Hilfsmedium (H) angeordnet sind, die mit einer Auswerteeinheit (21) verbunden sind, der eine Konstante (m) und das Verhältnis der wirksamen Flächen ($V_A$) von Hubglocke (9) und Ventilteller (6) zuführbar sind.

4. Einrichtung nach Anspruch 3, **dadurch gekennzeichnet,** daß zum Bestimmen der Konstanten (m) an Sicherheitsventilen, deren Schließdrücke ($P_S$) bekannt sind, Druckaufnehmer (19, 20) im Medium (M) und im Hilfsmedium (H) angeordnet sind und daß diese mit der Auswerteeinheit (21) verbunden sind.

## Claims

1. Method for testing a spring-loaded safety valve (1) which includes a closing device (4) and which is loaded by a medium (M), wherein to determine the closing pressure ($P_S$) of the safety valve (1) the pressure of the medium (M) on the closing device (4) is selected to be less than the closing pressure ($P_S$) to be expected, and wherein the closing device (4) is raised by a force originating from an auxiliary lifting device (8), in that a chamber (10) below a lifting bell (9) in the auxiliary lifting device (8) is loaded with an auxiliary medium (H), characterized in that to close the safety valve (1) the auxiliary medium (H) is diverted out of the chamber (10) of the auxiliary lifting device (8) which is loaded with the auxiliary medium (H) and at the same time a supply of auxiliary medium is conducted through the chamber (10) and is diverted, in that the pressures ($P_P$, $P_H$) of the medium (M) and of the auxiliary medium (H) are measured when the safety valve (1) closes, and in that the closing pressure is determined from these pressures, from the effective area ratio ($V_A$) of the lifting bell (9) and the valve plate (6) of the closing device (4) and from a constant (m) according to the equation

$$P_S = P_P + \frac{P_H \cdot V_A}{m+1} \qquad [3]$$

with $P_S$ being the closing pressure of the safety valve (1), $P_P$ being the measured pressure of the medium (M) which acts on the closing device (4) during the closing procedure, $P_H$ being the measured pressure of the auxiliary medium (H) which acts on the lifting bell (9) during the closing procedure, $V_A$ being the ratio of the effective areas of the lifting bell (9) and the closing device (4) and m being a constant.

2. Method according to claim 1, characterized in that to determine the constant (m) in known safety valves the closing pressure ($P_S$) is measured according to a known method, in that the pressure ($P_P$) of the medium (M) and the pressure ($P_H$) of the auxiliary medium (H) are measured during the closing procedure, in that a correction element (K) is determined according to the equation $P_S = P_P + P_H \cdot V_A + K$ [1] and in that the constant (m) is determined experimentally as an increase of a function $-K = f(P_S)$ obtained from several value pairs ($-K$, $P_S$).

3. Device for testing a spring-loaded safety valve (1) which includes a closing device (4) with a valve plate (6) and which is loaded by a medium (M), wherein a pressure of the medium (M) acts on the valve plate (6) of the safety valve (1), which pressure is less than the closing pressure ($P_S$) to be expected, wherein an auxiliary lifting device (8), which operates in the opening direction of the safety valve (1) and can open it, can be connected to the safety valve (1), and wherein the auxiliary lifting device (8) includes a lifting bell (9) which can be connected to the closing device (4) of the safety valve (1), which lifting bell is displaceable in a housing (8a), wherein a chamber (10) is arranged in the auxiliary lifting device (8) on the side of the lifting bell (9) facing the safety valve (1), which chamber is connected to a supply line (12) and to a removal line (13) for an auxiliary medium (H), characterized in that a store tank (16) for auxiliary medium (H) is arranged in the supply line (12), which store tank is filled when the safety valve (1) is opened, in that a valve (14) is arranged in the removal line (13) so that when this valve (14) is opened, the contents of the store tank (16) flow away through the chamber (10) of the auxiliary lifting device (8), and in that pressure sensors (19, 20) are arranged in the medium (M) and in the auxiliary medium (H) and are connected to an evaluation unit (21) to which a constant (m) and the ratio of the effective areas ($V_A$) of the lifting bell (9) and the valve plate (6) can be supplied.

4. Device according to claim 3, characterized in that to determine the constant (m) in safety valves, the closing pressures ($P_S$) of which are known, pressure sensors (19, 20) are arranged in the medium (M) and in the auxiliary medium (H), and in that they are connected to the evaluation unit (21).

**Revendications**

1. Procédé de contrôle d'une soupape de sûreté (1) à ressort, laquelle comporte un dispositif de fermeture (4) et est alimentée par un fluide (M), pour déterminer la pression de fermeture ($P_S$) de la soupape de sûreté (1), la pression du fluide (M) agissant sur le dispositif de fermeture (4) étant choisie plus faible que la pression de fermeture ($P_S$) escomptée et le dispositif de fermeture (4) étant soulevé par une force provenant d'un dispositif auxiliaire de levage (8) en alimentant un espace (10) situé au-dessous d'une cloche de levage (9) dans le dispositif auxiliaire de levage (8) par un fluide auxiliaire (H), caractérisé en ce que pour fermer la soupape de sûreté (1), le fluide auxiliaire (H) est évacué de l'espace (10) alimenté par le fluide auxiliaire (H) du dispositif auxiliaire de levage (8) et en même temps, une réserve de fluide auxiliaire est cheminée à travers l'espace (10) et évacuée, en ce que les pressions ($P_P$, $P_H$) du fluide (M) et du fluide auxiliaire (H) sont mesurées à la fermeture de la soupape de sûreté (1) et en ce qu'à partir de ces pressions, à partir du rapport ($V_A$) des surfaces effectives de la cloche de levage (9) et de la tête de soupape (6) du dispositif de fermeture (4) et à partir d'une constante (m), la pression de fermeture est déterminée selon l'équation

$$P_S = P_P + \frac{P_H \cdot V_A}{m + 1} \qquad [3],$$

$P_S$ étant la pression de fermeture de la soupape de sûreté (1), $P_P$ la pression mesurée du fluide (M), agissant à la fermeture sur le dispositif de fermeture (4), $P_H$ la pression mesurée du fluide auxiliaire (H), agissant à la fermeture sur la cloche de levage (9), $V_A$ le rapport des surfaces effectives de la cloche de levage (9) et du dispositif de fermeture (4) et m une constante.

2. Procédé selon la revendication 1, caractérisé en ce que pour déterminer la constante (m) sur des soupapes de sûreté connues, la pression de fermeture ($P_S$) est mesurée selon un procédé connu, en ce que la pression ($P_P$) du fluide (M) et la pression ($P_H$) du fluide auxiliaire (H) sont mesurées à la fermeture, en ce qu'un terme de correction (K) est déterminé selon l'équation $P_S = P_P + P_H \cdot V_A + K$ [1] et en ce que la constante (m) est déterminée expérimentalement comme pente d'une fonction $-K = f(P_S)$ obtenue à partir de plusieurs paires de valeurs ($-K$, $P_S$).

3. Dispositif de contrôle d'une soupape de sûreté (1) à ressort, laquelle comporte un dispositif de fermeture (4) pourvu d'une tête de soupape (6) et est alimentée par un fluide (M), sur la tête de soupape (6) de la soupape de sûreté (1) agissant une pression du fluide (M), qui est plus faible que la pression de fermeture ($P_S$) escomptée, à la soupape de sûreté (1) pouvant être relié un dispositif auxiliaire de levage (8), qui agit dans le sens d'ouverture de la soupape de sûreté (1) et est en mesure d'ouvrir celle-ci, et le dispositif auxiliaire de levage (8) comportant une cloche de levage (9) susceptible d'être reliée au dispositif de fermeture (4) de la soupape de sûreté (1), qui est déplaçable dans une cage (8a), un espace (10) étant disposé sur le côté orienté vers la soupape de sûreté (1) de la cloche de levage (9) dans le dispositif auxiliaire de levage (8), qui est relié à une conduite d'amenée (12) et à une conduite d'évacuation (13) d'un fluide auxiliaire (H), caractérisé en ce qu'un réservoir (16) de fluide auxiliaire (H) est disposé dans la conduite d'amenée (12), qui est rempli en position ouverte de la soupape de sûreté (1), en ce qu'une soupape (14) est disposée dans la conduite d'évacuation (13), de sorte qu'à l'ouverture de cette soupape (14), le contenu du réservoir (16) s'écoule à travers l'espace (10) du dispositif auxiliaire de levage (8) et en ce que des capteurs de pression (19, 20) sont disposés dans le fluide (M) et dans le fluide auxiliaire (H), qui sont reliés à une unité d'évaluation (21), laquelle peut être alimentée avec une constante (m) et avec le rapport ($V_A$) des surfaces effectives de la cloche de levage (9) et de la tête de soupape (6).

4. Dispositif selon la revendication 3, caractérisé en ce que pour déterminer les constantes (m) sur des soupapes de sûreté dont les pressions de fermeture ($P_S$) sont connues. des capteurs de pression (19, 20) sont disposés dans le fluide (M) et dans le fluide auxiliaire (H) et en ce que ceux-ci sont reliés à l'unité d'évaluation (21).

FIG 1

FIG 2